(19) Europäisches Patentamt
European Patent Office
Office européen des brevets

(11) **EP 4 755 695 A1**

(12) **EUROPEAN PATENT APPLICATION**

(43) Date of publication:
**10.06.2026 Bulletin 2026/24**

(21) Application number: **24217571.9**

(22) Date of filing: **04.12.2024**

(51) International Patent Classification (IPC):
**B60L 3/10** (2006.01)    **B60L 15/20** (2006.01)
**G05D 17/00** (2006.01)

(52) Cooperative Patent Classification (CPC):
**B60L 15/20; B60L 3/10; B60L 15/2009;**
**G05D 17/00;** B60L 2240/12; B60L 2240/421;
B60L 2240/423; B60L 2240/461; B60L 2240/465;
B60L 2250/26

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Polestar Performance AB**
**405 31 Gothenburg (SE)**

(72) Inventors:
• **ALBINSSON, Anton**
**443 50 Lerum (SE)**
• **SALIF, Ramadan**
**418 77 Göteborg (SE)**

(74) Representative: **Zacco Sweden AB**
**P.O. Box 5581**
**Löjtnantsgatan 21**
**114 85 Stockholm (SE)**

(54) **A CONTROL SYSTEM FOR AN ELECTRIC VEHICLE**

(57) The present disclosure relates to a control system (10) for an electric vehicle, the control system (10) comprising control circuitry (30) being configured to measure a torque of an electric motor (50) of said electric vehicle, a speed of said electric motor (50) and a speed of said electric vehicle. Further, the system (10) is configured to determine an instantaneous longitudinal tyre force of at least one tyre of said electric vehicle and determine a target motor speed. Further, the control system (10) is configured to control, by use of a feedforward-feedback controller (20), said speed of said electric motor (50) based on said target motor speed. The feedforward-feedback controller (20) comprises feedback control part and feedforward control part (20a, 20b), wherein the feedforward control part (20b) is configured to, upon control of said speed of said electric motor (50) provide a feedforward electric motor torque having a predefined correlation to said instantaneous longitudinal tyre force.

Figure 1

EP 4 755 695 A1

**Description**

TECHNICAL FIELD

The present disclosure relates to a control system for an electric vehicle. A method for controlling an electric vehicle and an electric vehicle.

BACKGROUND

Vehicle control systems are crucial for vehicles to prevent wheel slip. Vehicle control systems help maintain vehicle stability and driver control, especially during acceleration or braking at slippery surfaces. An efficient vehicle control system is therefore able to optimize safety and extend tyre life.

Conventionally, vehicle control systems operate by using feedforward-feedback controllers which generally operate according to a control strategy in which a feedforward component proactively adjusts expected disturbances while a feedback component continuously monitors and corrects remaining errors. As the feedback component and the feedforward component work jointly, both the components need to be optimized for the vehicle control system to operate according to requirements.

A common issue with vehicle control systems of the present art using feedforward-feedback controllers is that the feedforward component is often sub-optimized for certain test scenario typical to vehicle testing environments.

Accordingly, an inefficient feedforward component need to be compensated by the feedback component which e.g. can result in high gain values which typically leads to oscillations and/or reduced vehicle stability.

Based on the aforementioned, there is a need for a vehicle control system that is adapted to operate efficiently in multiple driving scenarios/environments. Especially, there is a need for a vehicle control system which utilizes a feedforward-feedback controller with an improved feedforward part.

SUMMARY

It is therefore an object of the present disclosure to alleviate at least some of the mentioned drawbacks to provide a control system for an electric vehicle and a method for controlling an electric vehicle.

The present disclosure is at least partly based on the insight that the method herein is more efficient compared to previous solutions as the feedforward control part of the feedforward-feedback controller is controlled to have a pre-defined correlation to an instantaneous longitudinal tyre force.

The present disclosure relates to a control system for an electric vehicle, the control system comprising control circuitry being configured to measure a torque of an electric motor of said electric vehicle, a speed of said electric motor and a speed of said electric vehicle. Further, the control system is configured to determine a longitudinal tyre force (e.g. an instantaneous/present longitudinal tyre force) of at least one tyre of said electric vehicle. Further, the control system is configured to determine/obtain a target motor speed and control, by use of a feedforward-feedback controller, said speed of said electric motor based on said target motor speed. Furthermore, the feedforward-feedback controller comprises feedback control part and feedforward control part, wherein the feedforward control part is configured to, upon/during control of said speed of said electric motor provide a feedforward electric motor torque having a pre-defined correlation to said instantaneous longitudinal tyre force.

The pre-defined correlation/relationship may be a correlation which optimally reduces slip risk. The correlation may be a fixed pre-defined correlation, so to be set to apply for all driving scenarios/states of the vehicle for each subsequent driving cycle.

Advantageously, as the vehicle control system provided herein operates to allow the feedforward part to contribute with a more accurate portion to the control output compared to feedforward parts of a known system, there is less burden on the feedback part. Consequently, the vehicle control system is able to mitigate slip by compensating the torque without reducing stability.

The feedforward control part may be configured to establish said pre-defined correlation by selecting/determining a feedforward electric motor torque that enables a propulsive torque or braking torque (in short, propulsive or braking torque) of a driveline of said electric vehicle to match a torque generated by the longitudinal tyre force. In other words, to achieve a substantial balance/equality from, (or, level) a propulsive or braking torque of a driveline of said electric vehicle and a torque generated by the longitudinal tyre force.

In one aspect, the matching may enable a net torque generated on at least one tyre to correspond to an acceleration or deceleration of the vehicle.

The selecting may be performed based on estimating/determining an amount/how much/impact of said (determined) longitudinal tyre force affects (or a torque generated thereby differs/compares to) said propulsive torque or braking torque of said driveline of said vehicle. Accordingly, upon estimating/calculating an amount the longitudinal tyre force (or a torque generated thereby) that affects the propulsive or braking torque, the feedforward torque may be provided thereby having the pre-defined correlation to said instantaneous longitudinal tyre force, to optimize tyre/wheel slip. The amount may be a relative amount, a difference or an absolute amount. In some aspects, the selecting may be performed based on estimating an amount said propulsive torque or braking torque of said driveline of said vehicle affect said longitudinal tyre force.

As an example, if during a forward driving state of the vehicle, the propulsive torque differs from the torque generated by the longitudinal tyre force there may be indication of slip. However, as the feedforward control part is configured to provide a feedforward electric motor torque which has a pre-defined correlation to said instantaneous longitudinal tyre force, slip may be avoided or mitigated swiftly.

Advantageously, as the control system may operate to provide a feedforward torque which is based on the propulsive or braking torque in view of the longitudinal tyre force, slip may be avoided in all driving scenarios/environments. As an example, feedforward control parts of some other existing arts are more directed to proactively reducing slip by e.g. using throttle position and predicted road conditions in the calculation. However, even though such a feedforward control part may be efficient in test driving scenarios, it will not be as efficient in a real driving scenario where there are several more factors that affect the traction of the vehicle.

Advantageously provided in the present disclosure, the pre-defined correlation may be based on expression:

$$I_{Driveline} * \frac{d}{dt} MotSpd = Tq_{Est} - (F_{x,wheels} * R_{Wheel}) * \alpha$$

wherein $I_{Driveline}$ is an equivalent driveline inertia, $\frac{d}{dt} MotSpd$ is rate of change of electric motor speed with respect to time, $Tq_{Est}$ is measured torque of said electric motor (i.e. the propulsive torque or braking torque), $F_{x,wheels}$ is longitudinal tyre force of said at least one tyre and $R_{Wheel}$ is tyre radius of said at least one tyre, $\alpha$ is effective gear ratio which may be pre-determined. The measured torque may be measured instantaneous torque.

The equivalent driveline inertia may be pre-calculated/determined and accessible from a memory device of the control system, e.g. from a look-up table (LUT) stored in the memory device.

It should be noted that, depending on whether the control system operates as a traction control system or a regenerative braking control system, the value of expression $I_{Driveline} * \frac{d}{dt} MotSpd$ may be either positive or negative. For example, when operating as a traction control system the value of the expression is positive and when operating as a regenerative braking control system the expression is negative.

Accordingly, the control system may be a regenerative braking control system and/or a traction control system. The control system may alternate between different modes depending on a driving state of the vehicle.

The feedback control part may be configured to provide a feedback electric motor torque by using a proportional-integral (PI) based control strategy, or a proportional-integral-derivative (PID) based control strategy. Accordingly, the control system may utilize PI or PID control strategies. Accordingly, the feedforward-feedback controller controls, said speed of said electric motor by transmitting a control signal based on a sum of said feedforward electric motor torque and a feedback electric motor torque, as the expression below shows:

$$Tq_{TractionCtrl} = Tq_{FF} + Tq_{FB} = f\left(Tq_{Est} - I_{Driveline} * \frac{d}{dt} MotSpd\right) + Tq_{PID}$$

The expression below shows a control signal ($Tq_{TractionCtrl}$) during traction control. Accordingly, the control signal is outputted based on a sum of feedforward electric motor torque ($Tq_{FF}$) and feedback electric motor torque ($Tq_{FB}$). The expression is directed to a PID based control strategy. A part of the aforementioned expression:

$Tq_{Est} - I_{Driveline} * \frac{d}{dt} MotSpd$ may refer to, or be indicative of the propulsive torque of the driveline of the electric vehicle or an effective wheel torque. The expression may define a propulsive torque of the driveline of the electric vehicle (i.e. rotational force transmitted from the electric motor to the wheel(s)) after subtracting the torque required to accelerate the electric motor with the effective driveline inertia. In other aspects, the expression may be the braking torque of the driveline of the electric vehicle.

The target motor speed may be determined based on external input, such as manual driver input and/or based on an input signal from a brake control unit of said vehicle.

The present disclosure further relates to an electric vehicle comprising the control system according to any aspect herein.

The present disclosure further relates to a computer-readable storage medium comprising instructions that, when executed by control circuitry (of e.g. the control system) causes it to perform the method according to any aspect herein.

The present disclosure further relates to a method of controlling an electric vehicle comprising the steps of measuring a torque of an electric motor of said electric vehicle, a speed a of said electric motor and a speed of said electric vehicle. Further, the method comprises determining a longitudinal tyre force of at least one tyre of said electric vehicle, determining a target motor speed and controlling, by use of a feedforward-feedback controller, said speed of said electric motor based on said target motor speed. The feedforward-feedback controller comprises feedback control part and feedforward control part, wherein the step of controlling comprises providing a feedforward electric motor torque, by use of the feedforward control part of said feedforward-feedback controller, the feedforward electric motor torque having a pre-defined correlation to said longitudinal tyre force.

BRIEF DESCRIPTION OF THE DRAWINGS

These and other features and advantages of the present disclosure will now be further clarified and described in more detail, with reference to the appended drawings in which;

Figure 1       illustrates a control system 10 schematically in accordance with some aspects of the present disclosure;

Figure 2A     illustrates a graph depicting torque over time in two different scenarios;

Figure 2B     illustrates a graph depicting force over longitudinal wheel slip;

Figure 3       illustrates a method in in accordance with some aspects of the present disclosure;

Figure 4       illustrates schematically a control circuitry of the control system schematically in accordance with some aspects of the present disclosure; and

Figure 5       illustrates an objective view of a vehicle comprising the control system and the drive system in accordance with some aspects of the present disclosure.

DETAILED DESCRIPTION

In the following detailed description, some embodiments of the present disclosure will be described. However, it is to be understood that features of the different embodiments are exchangeable between the embodiments and may be combined in different ways, unless anything else is specifically indicated. Even though in the following description, numerous specific details are set forth to provide a more thorough understanding of the present disclosure, it will be apparent to one skilled in the art that the present disclosure may be practiced without these specific details. In other instances, well known constructions or functions are not described in detail, so as not to obscure the present disclosure.

It is also to be understood that the terminology used herein is for purpose of describing particular aspects only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. More specifically, the wording "one or more" of a set of elements (as in "one or more of A, B and C" or "at least one of A, B and C") is to be interpreted as either a conjunctive or disjunctive logic. Put differently, it may refer either to all elements, one element or combination of two or more elements of a set of elements. For example, the wording "A, B and C" may be interpreted as A or B or C, A and B and C, A and B, B and C, or A and C.

It will also be understood that, although the term first, second, etc. may be used herein to describe various elements or features, these elements should not be limited by these terms. These terms are only used to distinguish one element from another. For example, a first element could be termed a second element, and, similarly, a second element could be termed a first element, without departing from the scope of the embodiments. The first element and the second element are both elements, but they are not the same element.

The term "electric vehicle" as used herein may refer to an all-electric vehicle, also referred to as an EV, a plug-in hybrid vehicle, also referred to as a PHEV, or a hybrid vehicle, also referred to as a HEV, where a hybrid vehicle refers to a vehicle utilizing multiple propulsion sources one of which is an electric drive system.

The term "electric machine" (E-machine) or "electric motor" refers to electromechanical power converting machines, such as electric motors or electric generators. The type of electric motor or the electric generator maybe any type that commonly known to the person skilled in the art.

The term "equivalent driveline inertia" may refer to an inertia that an electric motor experience due to the components in the driveline, including the wheels, axle, and any gears.

The term "longitudinal tyre force" may refer to a force exerted along a direction of the vehicles motion e.g. during acceleration or braking. It is to be understood by a person skilled in the art that the "longitudinal tyre force" may represent one or more instantaneous value of the tyre force, and may be dynamically estimated.

The term "torque generated by the longitudinal tyre force" may refer to the torque produced about the tyres rotational axis which is arising from the longitudinal tyre force, e.g. the force generated during acceleration or braking and is applied at the contact patch of the tyre.

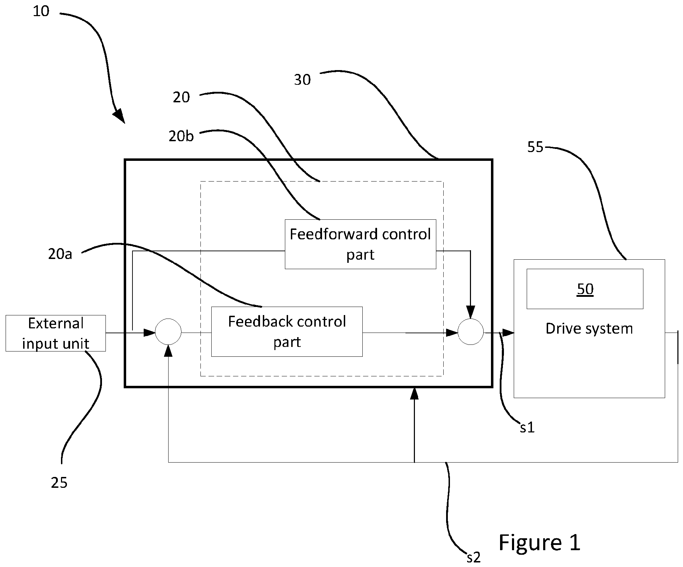

Figure 1 schematically illustrates a control system 10 for an electric vehicle, the control system 10 comprising control circuitry 30 being configured to measure/obtain/determine a torque of an electric motor 50 of said electric vehicle, a speed of said electric motor 50 and a speed of said electric vehicle. The torque and speed may be measured in real-time so to be instantaneous values/parameters.

Further, the control system 10 is configured to determine an instantaneous longitudinal tyre force of at least one tyre of said electric vehicle and determine a target electric motor speed. Further, the system 10 is configured to control, by use of a feedforward-feedback controller 20, said speed of said electric motor 50 based on said target motor speed.

Moreover, Figure 1 illustrates that the feedforward-feedback controller 20 comprises feedback control part and feedforward control part 20a, 20b, wherein the feedforward control part 20b is configured to, upon control of said speed of said electric motor 50 provide a feedforward electric motor torque having a pre-defined correlation to said longitudinal tyre force.

Figure 1 further illustrates that the control system 10 may comprise an external input unit 25 which is configured to receive external input (signals) indicative of a target motor speed. The external input may be manual input or a driver-assistance input and/or an input signal from a brake control unit of said vehicle.

Figure 1 further illustrates that the control circuitry 30 may control, by use of said feedforward-feedback controller 20, said speed of said electric motor 50 by transmitting a control signal s1 based on a sum of said feedforward electric motor torque and a feedback electric motor torque.

Figure 1 further illustrates reference numeral s2 which is data from the drive system 55 of the vehicle 55. The data may be sensor data obtained by one or more sensor devices of the drive system 55. For example, the data may be measured torque which is provided as feedback directly to the feedforward-feedback controller 20, the data may also be other data such as electric motor speed, electric vehicle speed which may be provided to the control circuitry 39 for performing calculations. The drive system 55 may comprise, as illustrated in Figure 1, the electric motor 50. However, the drive system 50 may also comprise other components such as inverter, rectifier, sensor devices (such as tyre sensors, resolver and any other type of sensor) for being enabling the control circuitry 30 to measure the torque of the electric motor, the speed of said electric motor, instantaneous longitudinal tyre force and the speed of said electric vehicle. The speed of the electric motor may refer to a rotational speed of the electric motor (e.g. a rotor thereof). The speed of the electric vehicle may refer to a linear speed of the electric vehicle (typically measured in km/h or mph) and may be a direct measure of how fast the electric vehicle is moving along a surface.

For the purpose of providing understanding of the present disclosure, an operation of the feedback control part 20a according to some aspects will be described in the following:

The feedback control part 20a which may be a PI controller or a PID controller (or any other suitable feedback controller) may be configured to continuously calculate an error value e(t) based on a difference between a desired target/setpoint r(t) (which may be target motor speed or target slip ratio or any other target) and a measured variable y(t) (measured/actual motor speed/actual slip ratio). The feedback control part 20a may be configured to minimize the error in swift manner by adjustment of a control variable/signal u(t) so to ensure an output of the controller follow the desired target/setpoint r(t), be robust to changes or disturbances.

If the feedback control part 20a is a PID (Proportional Integral Derivative) controller the feedback control part 20a comprises three components that are adjusted based on the difference between the desired target and the measured variable y(t)

The output of a PID controller ($u(t)$) is calculated using the sum of the Proportional, Integral, and Derivative terms where $K_P$, $K_I$, and $K_D$ are constants that can be adjusted to fine-tune the performance of the controller e.g. according to the following expression:

$$u(t) = K_p * e(t) + K_i \int e(t)dt + K_p * \frac{de}{dt}$$

The $K_P$-constant adjusts the output based on the error between the desired target and the measured variable. The larger the error, the larger the correction applied.

The $K_i$ constant may adjust the output based on the accumulated error over time. It helps eliminate steady-state error and can improve the stability of the control system.

The $K_d$ constant may adjust the output based on the rate of change of the error and may dampen oscillations and improve the stability of the control system.

However, as appreciated the feedforward control part 20b may be configured to provide a proactive control action to maintain or optimize control of the vehicle rather than operating based on a difference between a desired target/setpoint and a measured variable. Therefore, by accompanying control signals from the feedforward control part and the feedback control part a more efficient control is achieved.

The feedforward-feedback controller 20 according to the present disclosure may be implemented within, or coupled to a traction control algorithm stored in e.g. a memory unit of the control circuitry 30.

The feedforward control part 20b may be configured to establish said pre-defined correlation by selecting a feedforward electric motor torque that enables a propulsive torque or braking torque of a driveline of said electric vehicle to match a torque generated by the longitudinal tyre force. The selection may be performed based on estimating an amount said longitudinal tyre force affects said propulsive torque or braking torque of said driveline of said vehicle.

The pre-defined correlation may be based on expression:

$$f\left(I_{Driveline} * \frac{d}{dt} MotSpd\right) = f\left(Tq_{Est} - (F_{x,wheels} * R_{Wheel}) * \alpha\right)$$

wherein $I_{Driveline}$ is an equivalent driveline inertia, $\frac{d}{dt} MotSpd$ is rate of change of electric motor speed with respect to time, $Tq_{Est}$ is measured torque of said electric motor, $F_{x,wheels}$ is longitudinal tyre force of said at least one tyre and $R_{Wheel}$ is tyre radius of said at least one tyre, $\alpha$ is effective gear ratio.

It should be noted that the control system 10 may be a traction control system and/or a regenerative braking stability control system.

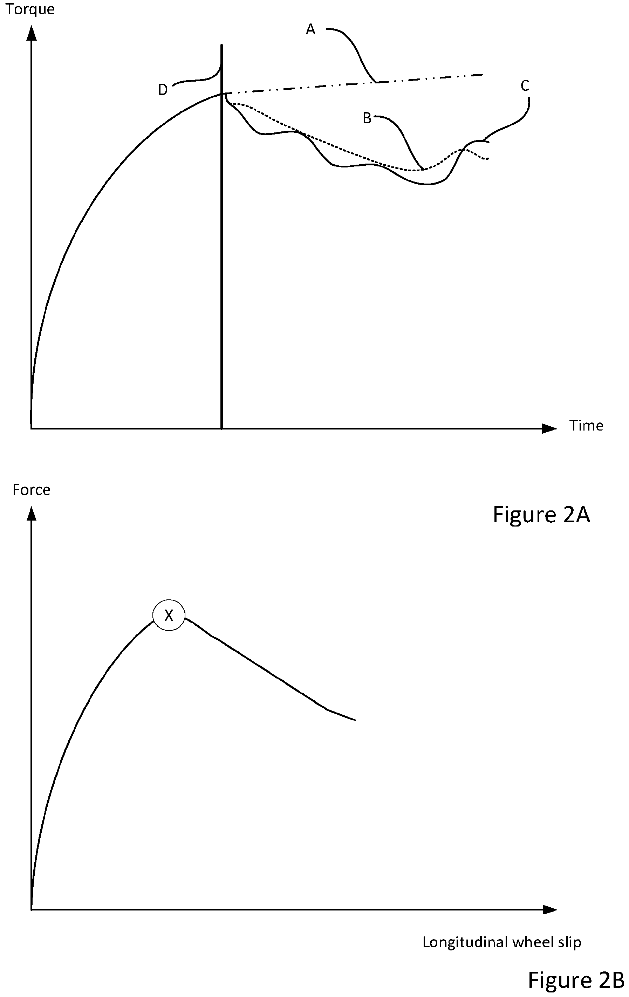

Figure 2A illustrates an example graph that illustrates how the feedforward part 20b of Figure 1 allows for less oscillations when controlling the electric vehicle upon implementation. Accordingly, Figure 2A illustrates that a driver requests (electric motor) torque until a point in time D in which the wheel cannot receive the requested torque due to slip. Hence, the requested torque deviates from an actual torque provided by the electric motor. Accordingly, the plot A illustrates a requested torque (which may be requested from e.g. a driver or the drive system or any other components/unit operable to request torque) which in this case is not achievable due to the slip. Plot C illustrates a conventional system in which there is a great amount of oscillations as the feedback part 20a of the controller 20 need to handle a greatest part of the disturbances. Such oscillations may lead to reduced performance, safety and stability of the electric vehicle. The plot B illustrates the feedforward-feedback controller 20 of the present disclosure in some aspects in which the feedforward control part 20b is configured to a feedforward electric motor torque having a pre-defined correlation to said instantaneous longitudinal tyre force that optimizes/minimizes wheel slip. Accordingly, Figure 2A illustrates that the feedforward-feedback controller 20 of the present disclosure may provide a 'smoother' curve (e.g. plot B) compared to conventional torque controllers e.g. Plot C. In Figure 2A, the graph is an example of the control system implemented as a traction control system. However, as appreciated, the control system of the present disclosure may be a regenerative braking control system also. In such a case, when a driver presses the brake-throttle to reduce a speed of the vehicle, the vehicle may lose grip. Then, the control system may operate correspondingly as shown in Figure 2A but during a braking state instead of a traction/acceleration state.

Figure 2B illustrates an example graph depicting that the optimal longitudinal tyre force may generally be achieved when the longitudinal wheel slip is at its optimal point (as indicated by the cross in Figure 2B). Once the slip is exceeding that slip level the force will reduce hence the reason why control needs to aim to be at the optimal point for best performance. Accordingly, the control system 10 herein is directed to providing a feedforward electric motor torque having a pre-defined correlation to said instantaneous longitudinal tyre force, in which the correlation maintains or targets a wheel slip at an optimal point such as the one illustrated in Figure 2B. Accordingly, the feedforward control part 20b herein may be configured to provide a torque that is possible to be delivered to accelerate/decelerate the vehicle, and not to accelerate the wheels into spinning due to insufficient road friction.

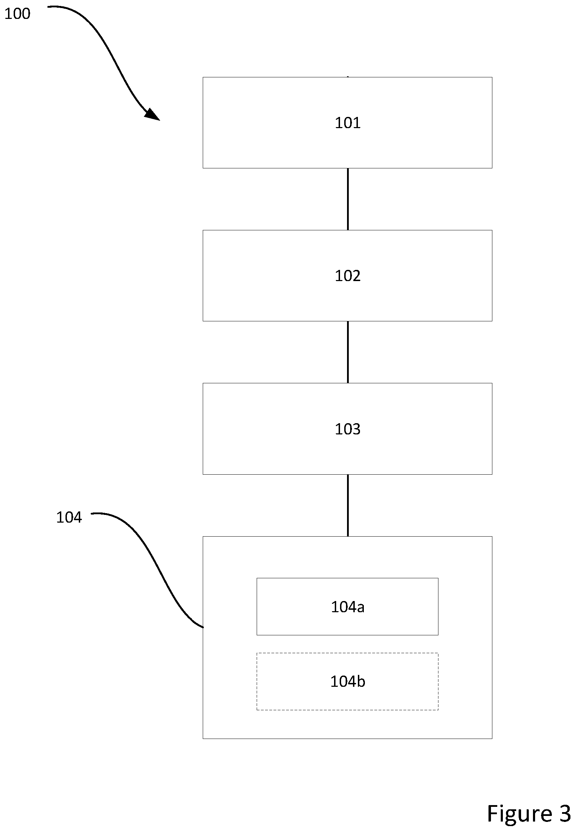

Figure 3 illustrates a method 100 in the form of a flowchart. Figure 3 illustrates a method 100 of controlling an electric vehicle comprising the steps of measuring 101 a torque of an electric motor of said electric vehicle, a speed a of said electric motor and a speed of said electric vehicle (which may all be instantaneous/present variables). Further, the method 100 comprises determining 102 an instantaneous longitudinal tyre force of at least one tyre of said electric vehicle. Further, the method comprises the steps of determining 103 a target motor speed and controlling 104, by use of a feedforward-feedback controller 20, said speed of said electric motor based on said target motor speed. The feedforward-feedback controller may comprise a feedback control part 20a and feedforward control part 20b (e.g. in the form of software modules), wherein the step of controlling 104 comprises providing 104a a feedforward electric motor torque, by use of the feedforward control part 20b of said feedforward-feedback controller 20, the feedforward electric motor torque having a pre-defined correlation to said instantaneous longitudinal tyre force. The method 100 may be computer-implemented. Further, the method 100 may be performed iteratively, in a loop so to continuously be able to control a traction or regenerative braking of the electric vehicle. Figure 3 further illustrates that the step of controlling 104 may also comprise providing 104b, by the feedback control part, a feedback electric motor torque by using a proportional-integral based control strategy, or a proportional-integral-derivative based control strategy, or any other suitable feedback based control strategy. The method 100 may further comprise a step of establishing said pre-defined correlation by selecting a feedforward electric motor torque that enables a propulsive torque or braking torque of a driveline of said electric vehicle to match a torque generated by the longitudinal tyre force.

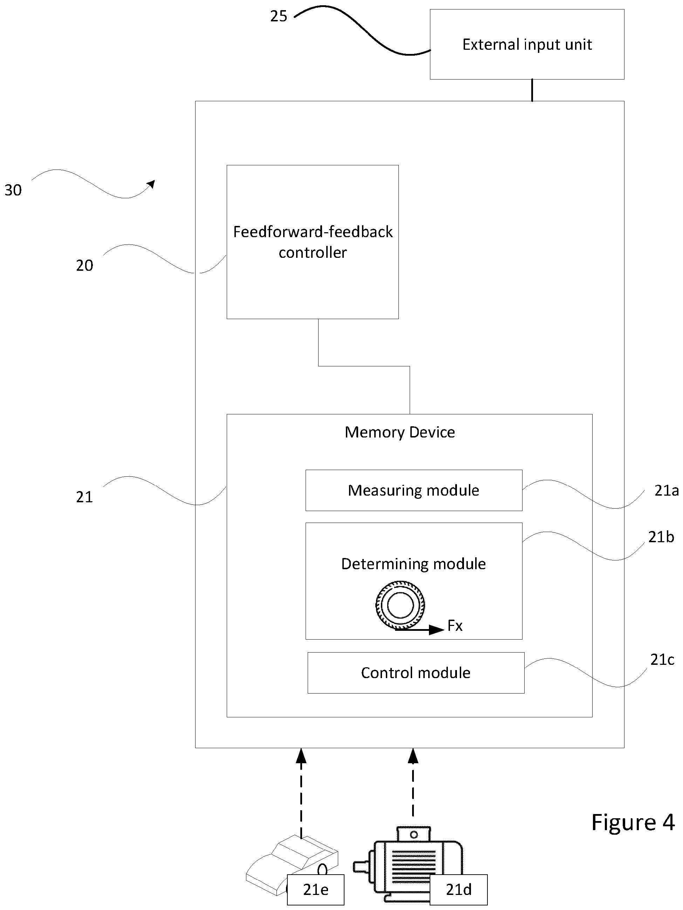

Figure 4 illustrates the control circuitry 30 schematically. Figure 4 illustrates that the control circuitry 30 may comprise said feedforward-feedback controller 20 and one or more memory devices 21 which may be within the feedforward-feedback controller 20 or coupled to the feedforward-feedback controller 20. The control circuitry 30 and/or modules therein (such as the feedforward-feedback controller 20) may comprise, for example, one or more central processing units (CPUs), graphics processing units (GPUs) dedicated to performing calculations, and/or other processing devices. It should be noted that the external input unit 25 may be a module within the control circuitry 30. The control circuitry 30 may also comprise input/output interfaces (not shown) for e.g. receiving data from sensor devices and output control signals. The memory device(s) 21 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by each associated module 21a-21c. Each memory device 21 may store any suitable instructions, data or information, including a computer program, software, an application including one or more of logic, rules, code, tables, etc. and/or other instructions capable of being executed by e.g. control circuitry 30 and, utilized. Specifically, the memory device may comprise a measuring/obtaining module 21a, a determining module 21b and a control module 21c. The memory device 21 may store any instructions and/or programs that may carry out the method 100 according to the disclosure herein. The instructions may be executed by the control circuitry 21. For example, the determining module 21b may comprise instructions for determining instantaneous longitudinal tyre force of one tyre, or for each tyre (e.g. separately for each tyre or as a mean value for all tyres) based on for example sensor data obtained from a sensor device 21d of the electric motor/inverter arranged to sense torque/speed of the electric motor, and/or a sensor device 21e of the vehicle arranged to sense speed of the vehicle. Further, the determining module 21b may comprise instructions/programs for determining instantaneous longitudinal tyre force. Accordingly, the control circuitry 30 may utilize the different modules 21a-21c to output control signals to provide a feedforward electric motor torque. The torque may be controlled via an inverter (not shown) of an electric motor (not shown) of the electric vehicle. The inverter may comprise a power module, a gate driver (which may control transistor switches of power module to output three-phase voltage). In some aspects, the feedforward-feedback controller may be implemented within the inverter or may be coupled to the inverter.

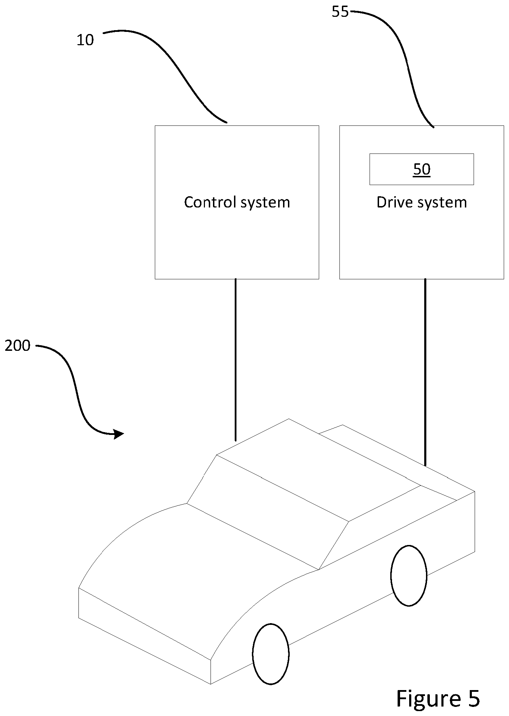

Figure 5 illustrates an electric vehicle 200 from an objective view comprising the control system 10 of any aspect herein. The electric vehicle 200 further comprises a drive system 55 and an electric motor 50 which are illustrated schematically. The electric motor 50 may be any suitable type of electric motor 50 such as a permanent magnet synchronous motor or an electrically excited synchronous motor, or any suitable type of electric motor 50. The electric vehicle 50 may as appreciated by a skilled person in the art comprise a battery pack, battery management systems, propulsive components etc.

**Claims**

1.   A control system (10) for an electric vehicle, the control system (10) comprising control circuitry (30) being configured to:

- measure a torque of an electric motor (50) of said electric vehicle, a speed of said electric motor (50) and a speed of said electric vehicle;
- determine a longitudinal tyre force of at least one tyre of said electric vehicle;
- determine a target motor speed;
- control, by use of a feedforward-feedback controller (20), said speed of said electric motor (50) based on said target motor speed;

wherein the feedforward-feedback controller (20) comprises feedback control part and feedforward control part (20a, 20b), wherein the feedforward control part (20b) is configured to, upon control of said speed of said electric motor (50):

- provide a feedforward electric motor torque having a pre-defined correlation to said longitudinal tyre force.

2. The control system of claim 1, wherein the feedforward control part is configured to establish said pre-defined correlation by selecting a feedforward electric motor torque that enables a propulsive torque or braking torque of a driveline of said electric vehicle to match a torque generated by the longitudinal tyre force.

3. The control system of claim 2, wherein selecting is performed based on estimating an amount said longitudinal tyre force affects said propulsive torque or braking torque of said driveline of said vehicle.

4. The control system of any one of the claims 1-3, wherein the pre-defined correlation is based on expression:

$$I_{Driveline} * \frac{d}{dt} MotSpd = Tq_{Est} - (F_{x,wheels} * R_{Wheel}) * \alpha$$

wherein $I_{Driveline}$ is an equivalent driveline inertia, $\frac{d}{dt} MotSpd$ is rate of change of electric motor speed with respect to time, $Tq_{Est}$ is measured torque of said electric motor, $F_{x,wheels}$ is longitudinal tyre force of said at least one tyre and $R_{Wheel}$ is tyre radius of said at least one tyre, $\alpha$ is effective gear ratio.

5. The control system of any one of the claims 1-4, wherein the feedback control part is configured to:

- provide a feedback electric motor torque by using a proportional-integral based control strategy, or a proportional-integral-derivative based control strategy.

6. The control system of any one of the claims 1-5, wherein the control system is a traction control system or a regenerative braking stability control system.

7. The control system of any one of the claims 1-6, wherein said feedforward-feedback controller (20) is configured to control said speed of said electric motor by transmitting a control signal based on a sum of said feedforward electric motor torque and a feedback electric motor torque.

8. The control system of any one of the claims 1-7, wherein the target motor speed is determined based on an external input, preferably manual driver input and/or an input signal from a brake control unit of said vehicle.

9. A method (100) of controlling an electric vehicle comprising:

- measuring (101) a torque of an electric motor of said electric vehicle, a speed of said electric motor and a speed of said electric vehicle;
- determining (102) a longitudinal tyre force of at least one tyre of said electric vehicle;
- determining (103) a target motor speed;
- controlling (104), by using a feedforward-feedback controller, said speed of said electric motor based on said target motor speed;

wherein the feedforward-feedback controller comprises feedback control part and feedforward control part, wherein the step of controlling comprises:

- providing (104a) a feedforward electric motor torque, by use of the feedforward control part of said feedforward-feedback controller, the feedforward electric motor torque having a pre-defined correlation to said longitudinal tyre force.

10. An electric vehicle comprising the control system (10) of any one of the claims 1-9.

11. A computer-readable storage medium comprising instructions that, when executed by control circuitry causes it to perform the method according to claim 10.

Figure 1

Figure 2A

Figure 2B

Figure 3

Figure 4

55

10

Control system

50

Drive system

200

Figure 5

Europäisches
Patentamt
European
Patent Office
Office européen
des brevets

# EUROPEAN SEARCH REPORT

**Application Number**

EP 24 21 7571

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 106 955 A1 (HITACHI LTD [JP]) 7 October 2009 (2009-10-07) * paragraphs [0001], [0019], [0027], [0035], [0040], [0046], [0077] - [0079], [0103] * * figures 1, 3, 4, 6-8 * ----- | 1-11 | INV. B60L3/10 B60L15/20 G05D17/00 |
| X | EP 2 223 821 A2 (TESLA MOTORS INC [US]) 1 September 2010 (2010-09-01) * paragraphs [0006], [0007], [0014], [0034] * * figures 6-9 * ----- | 1-11 | |

**TECHNICAL FIELDS SEARCHED (IPC)**

B60L
G05D

The present search report has been drawn up for all claims

| Place of search | Date of completion of the search | Examiner |
|---|---|---|
| The Hague | 30 May 2025 | Wirth, Sebastian |

## ANNEX TO THE EUROPEAN SEARCH REPORT
## ON EUROPEAN PATENT APPLICATION NO.

EP 24 21 7571

This annex lists the patent family members relating to the patent documents cited in the above-mentioned European search report.
The members are as contained in the European Patent Office EDP file on
The European Patent Office is in no way liable for these particulars which are merely given for the purpose of information.

30-05-2025

| Patent document cited in search report | | Publication date | Patent family member(s) | | Publication date |
|---|---|---|---|---|---|
| EP 2106955 | A1 | 07-10-2009 | EP | 2106955 A1 | 07-10-2009 |
| | | | JP | 4413931 B2 | 10-02-2010 |
| | | | JP | 2008178216 A | 31-07-2008 |
| | | | US | 2010114447 A1 | 06-05-2010 |
| | | | WO | 2008087925 A1 | 24-07-2008 |
| EP 2223821 | A2 | 01-09-2010 | EP | 2223821 A2 | 01-09-2010 |
| | | | US | 7739005 B1 | 15-06-2010 |
| | | | US | 7742852 B1 | 22-06-2010 |
| | | | US | 7747363 B1 | 29-06-2010 |

EPO FORM P0459

For more details about this annex : see Official Journal of the European Patent Office, No. 12/82